**Europäisches Patentamt**

**European Patent Office**

**Office européen des brevets**

(19)

(11) Veröffentlichungsnummer : **0 067 123 B2**

(12) **NEUE EUROPÄISCHE PATENTSCHRIFT**

(45) Veröffentlichungstag der neuen Patentschrift :
01.07.92 Patentblatt 92/27

(51) Int. Cl.$^5$ : **B60N 2/06**

(21) Anmeldenummer : 82810237.6

(22) Anmeldetag : 01.06.82

(54) **Vorrichtung zur Lagerung eines verschiebbaren Sitzes beispielsweise in einem Kraftfahrzeug.**

(30) Priorität : 04.06.81 DE 3122124

(43) Veröffentlichungstag der Anmeldung :
15.12.82 Patentblatt 82/50

(45) Bekanntmachung des Hinweises auf die
Patenterteilung :
09.09.87 Patentblatt 87/37

(45) Bekanntmachung des Hinweises auf die
Entscheidung über den Einspruch :
01.07.92 Patentblatt 92/27

(84) Benannte Vertragsstaaten :
AT BE CH DE FR GB IT LI LU NL SE

(56) Entgegenhaltungen :
DE-A- 2 411 414
DE-A- 2 700 799

(56) Entgegenhaltungen :
DE-A- 2 901 602
DE-U- 1 796 018
FR-A- 1 565 545
GB-A- 1 483 785
US-A- 2 702 582
US-A- 3 125 318
US-A- 4 068 887

(73) Patentinhaber : ALUSUISSE-LONZA
SERVICES AG
Feldeggstrasse 4
CH-8034 Zürich (CH)

(72) Erfinder : Frank, Simon
Alterpostweg 4
W-7708 Watterdingen (DE)

(74) Vertreter : Hiebsch, Gerhard F., Dipl.-Ing. et al
Erzbergerstrasse 5A Postfach 464
W-7700 Singen 1 (DE)

EP 0 067 123 B2

## Beschreibung

Die Erfindung betrifft eine Vorrichtung zur Lagerung eines längsverschiebbaren Sitzes, beispielsweise in einem Kraftfahrzeug, mit in ortsfesten Führungsschienen mittels zwischengeordneter Rollkörper in Schienenlängsrichtung beweglich geführten und arretierbaren Gleitschienen, welche Schienen Seitenteile aufweisen, an denen in Gleitrichtung verlaufende Längsstege mit jeweils einer in Einbaulage horizontalen Fläche angeformt sind, wobei die Fläche eines ersten Längssteges einer Gegenfläche eines zweiten Längssteges der jeweils anderen Schiene gegenüberliegt und die Fläche der Gleitschiene die Gegenfläche der Führungsschiene untergreift sowie von den einander in geringem Abstand gegenüberliegenden Flächen zumindest eine Fläche mit wenigstens einer zur Gegenfläche weisenden hakenförmigen Ausformung versehen ist, welche Ausformung eine seitliche, zum Seitenteil der zugehörigen Schiene weisende Stirnfläche besitzt und bei Belastung der Gleitschiene durch anhebenden Zug mit dem Längssteg der benachbarten Schiene in Eingriff bringbar angeordnet ist.

Eine derartige Längsführung mit annähernd U-förmigen Schienenprofilen offenbart die DE-A 29 01 602 ; der obere Bereich der Seitenteile der ortsfest mit dem Fahrzeugboden verbundenen Führungsschiene ist zur Bildung jeweils einer der Gegenflächen querschnittlich etwa S-förmig verformt. Die obenliegenden Profilkanten werden von der nach unten offenen rinnenartigen Gleitschiene übergriffen, welche durch Zwischenschaltung von Kugeln an der Führungsschiene leicht verschoben werden kann.

Von der Gleitschiene ragen zungenartige Haken zu jener Gegenfläche, die durch Umkanten der Randbereiche des Gleitschienenprofils nach dem Einbringen von Randschlitzen entstanden sind. Im Belastungszustand bei aufwärts gerichtetem Zug können die aufwärts ragenden Haken der Gleitschiene in fensterartige Ausnehmungen der Führungsschiene eingreifen und haken sich dann an den Ausnehmungsrändern fest. Voraussetzung für die Betriebssicherheit dieser stufenartig wirksam werdenden Hebesicherung ist, daß im Augenblick des beschriebenen Belastungszustandes tatsächlich jene aufragenden Haken unter entsprechenden Ausnehmungen stehen. Außerdem ist es sehr fertigungsaufwendig, an den verformten Blechrinnen derartige Paarungen aus zungenartigen Haken und aus Ausnehmungen herzustellen. Als weiterer Mangel hat sich erwiesen daß die Verwendung solcher Paarungen aus Gründen der Betriebssicherheit beschränkt bleiben muß, da die Ausnehmungen den Querschnitt der Führungsschiene stark schwächen und die abgekanteten Haken der Gleitschiene verhältnismäßig großen Kräften zu widerstehen haben.

Bislang übliche Schienenführungen sind von verhältnismäßig hohem Gewicht und konstruktiv aufwendig, da ansonsten – besonders im Falle der Befestigung von Sicherheitsgurten am Sitz – die Schienenprofile bei etwa durch einen Zusammenstoß erzeugter Überlastung dieser nicht gewachsen wären; die Gleitschiene wird oftmals aus der Führungsschiene herausgehoben – und mit ihr der Fahrzeugsitz. Aus der FR-A 1565 545 ist eine Schienenpaarung eus mehreren aneinander geschweißten Schienenteilen und mit Hakenender bekannt.

Angesichts dieser Gegebenheiten hat sich der Erfinder das Ziel gesetzt, eine Gleitführung der eingangs erwähnten Art zu schaffen, die bei erwünscht geringem Gewicht selbst hohen Belastungen sicher standhält, darüber hinaus zudem einfach sowie kostengünstig herzustellen, einzubauen und zu handhaben ist.

Zur Lösung dieser Aufgabe führt die Lehre nach Patentanspruch 1. Zudem hat es sich als günstig erwiesen, beide gegenüberliegenden Flächen mit aufragenden Profilrippen als Ausformung zu versehen, die im Belastungszustand kämmend ineinander eingreifen.

Bei der erfindungsgemäßen Längsführung werden also – bevorzugt zwei – Profile verwendet, welche in einfacher Weise aus einem Strangpreßprofil ohne Nachbearbeitungszwang hergestellt werden können und trotz Gleitbarkeit fest ineinander sitzen. Dank dieser Herstellungsart kann zumindest einer der seitlichen Längsstege aus dem mittleren Bereich seines Seitenteils – im Falle eines U-Profils aus dessen Schenkel –, nämlich in Abstand zur Profilkante erzeugt werden ; dieser Längssteg vermag hohe Kräfte aufzunehmen und damit insbesondere als Anschlag- oder Gegenfläche zu dienen. Die durchgehende Profilrippe wiederum gewährleistet auch bei stufenloser Verstellung des Sitzes in Gleitrichtung das sichere Eingreifen der Paarung ineinander und somit stets ausreichenden Widerstand gegen ein seitliches Ausbiegen der Gleitschiene.

Die einerseits von den Seitenteilen oder Schenkeln der Führungsschiene abragenden, jene Flächen anbietenden Längsstege werden anderseits von entsprechenden Längsstegen der Gleitschiene untergriffen, können infolgedessen nicht mehr ohne weiteres nach oben abgehoben werden. Soweit derartige seitlich abkragende Stege, Rippen od. dgl. bei üblichen Schienenführungen bekannt sind, liegen diese den Kugeln an und gleiten infolgedessen bei Belastung an diesen vorbei nach oben. Die erfindungsgemäßen Längsstege od. dgl. sind selbständige Organe und haben mit der Kugelführung bzw. Kugellagerung nichts zu tun.

Nach einem weiteren Merkmal der Erfindung ist die zum benachbarten Seitenteil gerichtete seitliche Stirnfläche der sägezahn- oder hakenartigen Ausformungen von Führungsschiene und/oder Gleitschiene als steile Flanke ausgebildet, die zum benachbarten Seitenteil der zugehörigen Schiene weist. Bei dieser Ausführung der Führungs- und/oder der Gleitschiene bietet die – an die Fläche des Längssteges angeformte – Ausformung oder Profilrippe mit ihrer Stirnfläche ein von der anderen Schiene zu hintergreifendes Widerlager.

Die Ausformungen mit zahn- oder hakenartigem Querschnitt sind so angeordnet, daß die Zahnoder Hakenstirnen der Gleitschiene die entsprechenden Flächen bzw. Stirnen der Sockelschiene hintergreifen und damit zusätzliche Sicherung gegen ein vertikales Herausheben sind ; die Verzahnungsteile werden hier zu Widerhaken.

Um einen sicheren Betrieb dieser kämmenden Längsführung zu erhalten, empfiehlt es sich, die seitlichen Stirnflächen der sägezahnartigen Ausformungen der Führungsschiene in geringem seitlichem Abstand und höhenversetzt zu den entsprechenden Stirnflächen der sägezahnförmigen Ausformungen der Gleitschiene anzuordnen.

Bei einer bevorzugten Form der Längsführung verläuft sowohl an der Gleitschiene als auch an der Führungsschiene parallel zu deren die Ausformungen aufweisenden Längsstegen jedes Seitenteils jeweils ein weiterer Längssteg ; zwischen beiden Längsstegen sind die Rollkörper gelagert. Die Führung der Rollkörper geschieht also zwischen zwei Längsstegen oder aber zwischen einem Längssteg und einer Kopf- oder Längsrippe der Schiene. Denn die freie Profilkannte kann von jener aus dem Seitenteil herausgeformten Kopfrippe gebildet werden, die also das Profil der Schiene abschließt und in parallelem Abstand zu einem Längssteg ihres Seitenteils verläuft ; die Kopfrippe kann – wie beschrieben – sowohl als Rollkörperhalterung dienen als auch Anschlagoder Gegenfläche bilden.

Die Führungsschiene kann erfindungsgemäß mit einem an der Außenseite eines der Seitenteile angeformten Winkelprofil versehen sein, das als Raste für eine – an sich bekannte – Arretiereinrichtung ausgebildet ist.

Im Rahmen der Erfindung liegt es auch, daß die Seitenteile und die angeformten Kopfrippen als Kugellagerung eine gekrümmte Rollfläche bilden, wobei sich der Radius der Kugel zum Radius der Rollfläche verhält wie 1 : 1,2 bis 1 : 3.

Ein besonderer Vorteil der erfindungsgemäßen Gleitführung ergibt sich daraus, daß die einstückig stranggepreßten Profile keine Überlappungen, also zueinander gebogene Teile einer Wandung, aufweisen. Auch werden die aus der DE-OS 29 01 602 bekannten herausgebogenen Haken vermieden, die dort umso leichter aufbiegbar sind, je dicker das Blech – mit zwangsläufig zu nehmendem Biegeradius – ist.

Im übrigen ist die erfindungsgemäße Anordnung sogar bei Schienenpaarung en einsetzbar, die auch aufeinanderliegende Gleitflächen ohne zwischen diese unmittelbar eingebrachte Rollkörper aufweisen ; dort Können nen z. B. Walzen zwischen den Boden zweier Rinnenprofile vorgesehen sein.

Die Erfindung wird nachfolgend anhand in der Zeichnung dargestellter bevorzugter Ausführungsbeispiele näher erläutert; es zeigt

Figur 1 eine schematisierte Seitenansicht eines Fahrgastsitzes auf einer Längsführung mit skizzenhaft angedeutetem Fahrgast;

Figur 2 den Querschnitt durch die Längsführung nach Linie II-II in Fig. 1 ;

Figur 3 ein vergrößertes Detail aus Fig. 2 entsprechend deren Feld III ;

Figur 4 einen vergrößerten Querschnitt durch einen Teil der Fig. 2 ;

Figur 5 eine Schrägsicht auf ein geschnittenes Detail der Fig. 2 ;

Figur 6 einen Querschnitt durch einen vergrößerten Abschnittder Fig. 2;

Figur 7 ein anderes Ausführungsbeispiel der Längsführung in einer der Fig. 2 entsprechenden Darstellung.

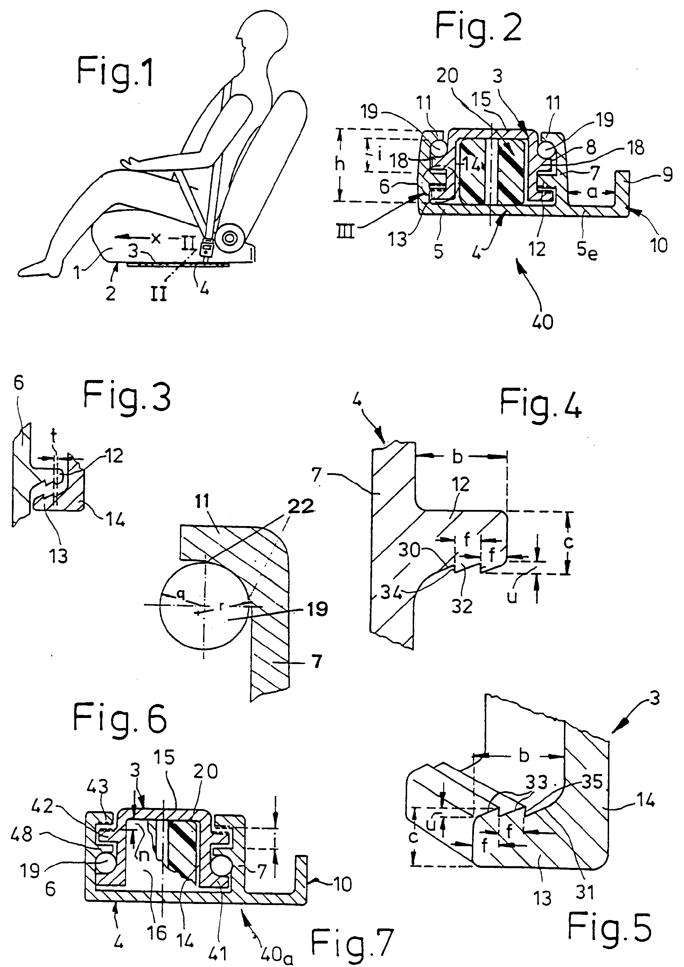

Ein Fahrgastsitz 1 eines nicht weiter wiedergegebenen Kraftfahrzeuges ist auf seiner Unterseite 2 mit Gleitschienen 3 versehen, die fahrzeugseitig festliegenden Führungsschienen 4 zugeordnet und darin aus einer in Fig. 1 gezeigten Endlage in Pfeilrichtung x verschieblich sind. Jede der Gleitschienen 3 bildet mit ihrer Führungsschiene 4 eine Längsführung 40 für den Fahrgastsitz 1.

Die Führungsschiene 4 wird von einem U-förmigen Profil aus einer Bodenplatte 5 und zwei seitlichen – einen nach oben offenen Rinnenraum 8 begrenzenden – Seitenteilen 6, 7 gebildet, wobei sich die Bodenplatte 5 über das in Fig. 2 rechts liegende Seitenteil 7 hinaus erstreckt und der so entstehende Bodenplattenansatz $5_e$ in eine zum Seitenteil 7 in einem Abstand a etwa parallele Randleiste 9 übergeht ; das aus dieser und jenem Bodenplattenansatz $5_e$ bestehende Winkelprofil 10 ist als Raste für eine in der Zeichnung nicht dargestellte Arretiereinrichtung des Fahrgastsitzes 1 gestaltet.

An beide Seitenteile 6, 7 der beispielsweisen Höhe h von etwa 18 mm sind an deren oberen Ende einander zugekehrte Kopfrippen 11 und – in vertikalem Abstand i von beispielsweise 8 mm dazu – Längsstege 12 angeformt.

In den Rinnenraum 8 der Führungsschiene 4 ragen – in der dargestellten Einbaulage – vertikal gerichtete Seitenteile 14 der Gleitschiene 3 so ein, daß jeder der Längsstege 12 der Führungsschiene 4 mit Spiel von einem parallelen Längssteg 13 eines Seitenteils 14 der Gleitschiene 3 untergriffen wird ; diese Seitenteile 14 sind durch einen Bodenstreifen 15 zu einem U-Profil mit nach unten offenem Profilraum 16 ergänzt (Fig. 6).

Oberhalb des Längssteges 12 der Führungsschiene 4 ist im Ausführungsbeispiel der Fig. 2 ein weiterer Längssteg 18 der Gleitschiene 3 zu erkennen; zwischen diesem Längssteg 18 und der benachbarten Kopfrippe 11 der Führungsschiene 4 sind Kugeln 19 gelagert, zudem zwischen der Bodenplatte 5, der Führungsschiene 4 und dem Bodenstreifen 15 der Gleitschiene 3 im Profilraum 16 Rollen 20 mit einer Gummiumreifung 21 angebracht.

Wie insbesondere die Fig. 3 bis 5 verdeutlichen, sind sowohl aus der nach unten weisenden Fläche 30 des Längssteges 12 der Führungsschiene 4 als auch aus der gegenüberliegenden Fläche 31 des untergreifenden Längssteges 13 der Gleitschiene 3 jeweils zwei querschnittlich sägezahnoder hakenartige Ausformungen 32 bzw. 33 als Profilrippen herausgeformt, deren zum Seitenteil 7 bzw. 14 weisende Stirnflächen 34 bzw. 35 in Fig. 3 in geringem seitlichem Abstand t zueinander parallel verlaufen ; beim Aufheben der Gleitschiene 3 wird deren Anschlagfläche 31 gegen die Gegenfläche 30 der Führungsschiene geführt.

Die Fig. 4, 5 zeigen die Länge b von etwa 4, 3 mm und die Höhe c von etwa 3 mm vom Längssteg 12 sowie vom untergreifenden Längssteg 13, ebenso den seitlichen Abstand f von etwa 1,2 mm der Stirnflächen 34 bzw. 35 der Profilrippen oder Ausformungen 32 bzw. 33 voneinander. Dabei beträgt die Profilrippenhöhe u hier 0,5 mm.

In Fig. 6 ist eine – im Querschnitt durch die Führungsschiene 4 – mit einem Radius r gekrümmte Rollfläche 22 mit einer Bogenkontur von etwa 90° am Übergang des Seitenteils 7 in die Kopfrippe 11 verdeutlicht, wobei das Verhältnis des Radius q der Kugel 19 zu jenem Radius r der Rollfläche 22 sich verhält wie 1 : 1 bis 1 : 3.

Bei der Ausführungsform der Längsführung $40_a$ nach Fig. 7 sind die Kugeln 19 nahe der Bodenplatte 5 der Führungsschiene 4 auf unteren – der Übersicht halber hier mit 41 bezeichneten – ungezahnten Kopfrippen der Gleitschiene 3 gelagert, wobei als Gegenführung ein mittlerer Längssteg 48 der Führungsschiene 4 dient.

Die Ausformungen oder Profilrippen 32 ragen hier in der zu Fig. 2 bis 5 beschriebenen Form von einer Längsrippe 43 am oberen Ende der Führungsschiene 4 ab, die anderen Ausformungen oder Profilrippen 33 von einer Längsrippe 42, die in Abstand n vom Bodenstreifen 15 aus dem Seitenteil 14 der Gleitschiene 3 herausgeformt ist.

Sowohl die Gleitschiene 3 als auch die Führungsschiene 4 samt Winkelprofil 10 für die Arretierung können in einfacher Weise als Stranpreßprofil – bevorzugt aus Leichtmetall – hergestellt und problemlos montiert werden.

Wird die obenliegende Gleitschiene 3 – bei einem Unfall in Abheberichtung über das normale Gewicht vor Sitz und Fahrgast hinausgehend – besonders belastet, greifen die beschriebenen Hakenpaarungen 32/33 ineinander und verhindern ein Verformen der Längsführung 40, $40_a$.

## Patentansprüche

1. Vorrichtung zur Lagerung eines längsverschiebbaren Sitzes, beispielsweise in einem Kraftfahrzeug, mit in ortsfesten Führungsschienen (4) mittels zwischengeordneter Rollkörper (20) in Schienenlängsrichtung beweglich geführten und arretierbaren Gleitschienen (3), welche Schienen (4, 3) Seitenteile (6, 7 ; 14) aufweisen, an denen in Gleitrichtung verlaufende Längsstege (12, 13) mit jeweils einer in Einbaulage horizontalen Fläche (30, 31) angeformt sind, wobei die Fläche (31) eines ersten Längssteges (13) einer Gegenfläche (30) eines zweiten Längssteges (12) der jeweils anderen Schiene (3, 4) gegenüberliegt und die Fläche (32) der Gleitschiene (3) die Gegenfläche (30) der Führungsschiene (4) untergreift, sowie von den einander in geringem Abstand gegenüberliegenden Flächen (30, 31 ) zumindest eine Fläche mit wenigstens einer zur Gegenfläche weisenden hakenförmigen Ausformung (32, 33) versehen ist, welche Ausformung eine seitliche, zum Seitenteil der zugehörigen Schiene (4, 3) weisende Stirnfläche (34, 35) besitzt und bei Belastung der Gleitschiene (3) durch anhebenden Zug mit dem Längssteg (12 bzw. 13) der benachbarten Schiene in Eingriff bringbar angeordnet ist, dadurch gekennzeichnet, daß die Ausformung von wenigstens einer in Gleitrichtung verlaufenden, durchgehenden Profilrippe (32 bzw. 33) sägezahn- oder hakenartigen Querschnittes eines stranggepreßten Leichtmetallprofils gebildet ist, und daß zumindest ein Längssteg (12, 13) als von seinem Seitenteil (6, 7 ; 14) im Abstand zu dessen Querschnittsenden frei abkragende Rippe ausgebildet ist, wobei an der Gleitschiene (3) und der Führungsschiene (4) den die Ausformungen (33 bzw. 32) aufweisenden Längsstegen (13 bzw. 12; 43 bzw. 42) jedes Seitenteils (14 und 6, 7) jeweils ein weiterer Längssteg (18 bzw. 11; 48 bzw. 41) zugeordnet ist und zwischen diesen die Rollkörper (19) gelagert sind.

2. Vorrichtung nach Anspruch 1, dadurch gekennzeichnet, daß beide gegenüberliegenden Flächen (31 bzw. 30) mit aufragenden Profilrippen als Ausformungen (33 bzw. 32) versehen sind, die im Belastungszustand kämmend ineinander einreifen.

3. Vorrichtung nach Anspruch 1 oder 2, dadurch gekennzeichnet, daß die zum benachbarten Seitenteil (6, 7 bzw. 14) gerichtete seitliche Stirnfläche (34 bzw. 35) der sägezahnartigen Ausformungen (32 bzw. 33) von Führungsschiene (4) und/oder Gleitschiene (3) als steile Flanke ausgebildet ist.

4. Vorrichtung nach wenigstens einem der Ansprüche 1 bis 4, dadurch gekennzeichnet, daß die seitlichen Stirnflächen (34) der sägezahnartigen Ausformungen (32) der Führungsschiene (4) in geringem seitlichen Abstand (t) und höhenversetzt zu den entsprechenden Stirnflächen (35) der sägezahnförmigen Ausformungen (33) der Gleitschiene (3) angeordnet sind.

5. Vorrichtung nach Anspruch 1, dadurch gekennzeichnet daß der weitere Längssteg (18 bzw 11; 48 bzw. 41) parallel zu den die Ausformungen (33 bw. 23) aufweisenden Längsstegen (13 bzw. 12; 43 bzw. 42) verläuft.

6. Vorrichtung nach wenigstens einem der Ansprüche 1 bis 5, dadurch gekennzeichnet, daß die Führungsschiene (4) mit einem an der Außenseite eines der Seitenteile (7) angeformten Winkelprofil (10) als Raste für eine Arretiereinrichtung versehen ist.

7. Vorrichtung nach wenigstens einem der Ansprüche 1 bis 6, dadurch gekennzeichnet, daß die Seitenteile (6, 7, 14) und angeformte Kopfrippen (11, 18) als Kugellagerung eine gekrümmte Rollfläche (22) bilden, wobei sich der Radius (q) der Kugel (19) zum Radius (r) der Rollfläche verhält wie 1 : 1,2 bis 1 : 3.

## Claims

1. Device for mounting a longitudinally displaceable seat, for example in a motor vehicle, with slide rails (3) movably guided and arrestable in the rail longitudinal direction in stationary guide rails (4) by means of interposed rolling bodies (19), which rails (4, 3) comprise side parts (6, 7; 14) on which there are formed longitudinal flanges (12, 13) extending in the sliding direction each with a surface (30, 31) which is horizontal in the installed position, while the surface (31) of a first longitudinal flange (13) lies opposite to a counter-surface (30) of a second longitudinal flange (12) of the other rail (3, 4) in each case and the surface (32) of the slide rail (3) grasps beneath the counter-surface (30) of the guide rail (4), and of the surfaces (30, 31) lying opposite to one another with slight spacing at least one surface is provided with at least one hook-shaped recess (32, 33) facing the counter-surface, which recess possesses a lateral end face (34, 35) facing the side part of the pertinent rail (4, 3) and is arranged to be bringable into engagement with the longitudinal flanges (12 or 13) of the adjacent rail by lifting traction on loading of the slide rail (3), characterised in that the recess is formed by at least one continuous profiled rib (32 or 33) of saw-tooth or hook-type cross-section of an extruded light metal section, and in that at least one longitudinal flange (12, 13) is formed as a rib protruding freely from its side part (6, 7; 14) at a distance from its cross-section ends, while at the slide rail (3) and the guide rail (4) a further longitudinal flange (18 or 11; 48 or 41) is allocated in each case to the longitudinal flanges (13 or 12; 43 or 42), comprising the recesses (33 or 32) of each side part (14 and 6, 7), and the rolling bodies (19) are mounted between these.

2. Device according to Claim 1, characterised in that both opposite surfaces (31 and 30) are provided with upwardly extending profiled ribs as recesses (33 and 32) which engage in meshing manner in one another in the loaded condition.

3. Device according to Claim 1 or 2, characterised in that the lateral end face (34 or 35), directed towards the adjacent side part (6,7 or 14), of the saw-tooth-type recesses (32 and 33) of guide rail (4) and/or slide rail (3) is formed as steep flank.

4. Device according to at least one of Claims 1 to 4, characterised in that the lateral end faces (34) of the saw-tooth-type recesses (32) of the guide rail (4) are arranged at a short lateral distance (t) from and offset in height in relation to the corresponding end faces (35) of the saw-tooth-shaped recesses (33) of the slide rail (3).

5. Device according to Claim 1, characterised in that the further longitudinal flange (18 or 11; 48 or 41) extends parallel to the longitudinal flanges (13 or 12; 43 or 42) comprising the recesses (33 or 23).

6. Device according to at least one of Claims 1 to 5, characterised in that the guide rail (4) is provided with an angle profile (10) formed on the outside of one of the side parts (7) as detent for an arresting device.

7. Device according to at least one of Claim 1 to 7, characterised in that the side parts (6, 7, 14) and formed-on head ribs (11, 18) as ball bearing mounting form a curved rolling surface (22), with the radius (q) of the ball (19) being in the ratio to the radius (r) of the rolling surface as 1 : 1.2 to 1 : 3.

## Revendications

1. Dipositif pour la portée d'un siège qui peut coulisser longitudinalement, par exemple dans un véhicule automobile, comportant des rails de coulissement (3) qui sont guidés en déplacement dans la direction longitudinale des rails dans les rails de guidage fixes en position (4) au moyen de corps de roulement (19) disposés entre les rails, et qui peuvent être bloqués, rails (4, 3) qui présentent des parties latérales (6, 7 ; 14) sur lesquelles sont venues de forme les nervures longitudinales (12, 13) courant dans la direction du coulissement avec respectivement une surface horizontale (30, 31) en position de montage, étant précisé que la surface (31) d'une première nervure longitudinale (13) se trouve en face d'une contre-surface (30) d'une seconde nervure longitudinale (12) de, chaque fois, l'autre rail (3, 4) et que la surface (32) du rail de coulissement (3) vient saisir par-dessous la contre-surface (30) du rail de guidage (4) étant précisé également que, parmi les surfaces (30, 31) situées en face l'une de l'autre et à faible distance, au moins l'une de ces surfaces comporte au moins un bord modifié (32, 33) en forme de crochet dirigé vers la contre-surface, bord modifié qui possède une surface frontale latérale (34, 35) dirigée vers la partie latérale du rail correspondant (4, 3) et qui, en cas de contrainte du rail de coulissement (3) par suite d'une traction qui le soulève, est disposé de façon à venir en prise avec la nervure longitudinale 12 ou 13 du rail voisin, caractérisé, en ce que le bord modifié est formé d'au moins une striure profilée (32 ou 33) continue, courant dans la direction du coulissement, de section en forme de dents de scie ou en forme de crochet d'un profilé extrudé en métal léger ; et en ce qu'au moins une nervure longitudinale (12, 13) est conçue sous forme de nervure qui se détache, comme un collet, de sa partie latérale (6, 7 ; 14), à distance des extrémités de la section de cette partie latérale, sur le rail de glissement (3) et sur le rail de guidage (4), une autre nervure longitudinale (18 ou 11 ; 48 ou 41) étant associée aux nervures longitudinales (13 ou 12 ; 43 ou 42), de chaque partie latérale (14 et 6,7) qui présentent les bords modifiés (32 ou 33), et les corps de roulement (19) ayant leur portée entre celles-ci.

2. Dispositif selon la revendication 1, caractérisé en ce que les deux surfaces situées l'une en face de l'autre (31 ou 30) comportent, en fait de bords modifiés (33 ou 32) des striures profilées débordantes qui, à l'état de contrainte, viennent engrener l'une dans l'autre.

3. dispositif selon la revendication 1 ou 2, caractérisé en ce que la surface frontale latérale (34 ou 35), dirigée vers la portion latérale voisine (6, 7) des bords modifiés en forme de dents de scie (32 ou 33) des rails de guidage (4) et/ou des rails de coulissement (3) est conçue sous forme de flanc à pente raide.

4. Dispositif selon au moins l'une des revendications 1 à 3, caractérisé en ce que les surfaces frontales latérales (34) des bords modifiés en forme de dents de scie (32) des rails de guidage (4) sont disposées à faible distance latérale (T) et décalées en hauteur par rapport aux surfaces frontales correspondantes (35) des bords modifiés en forme de dents de scie (33) des rails de coulissement (3).

5. Dipositif selon la revendication 1, caractérisé en ce que l'autre nervure longitudinale (18 ou 11 ; 48 ou 41) s'étend parallèlement aux nervures longitudinales (13 ou 12 ; 43 ou 42) qui présentent les bords modifiés (33 ou 23).

6. Dispositif selon au moins l'une des revendication 1 à 5, caractérisé en ce que le rail de guidage (4) présente un profil en équerre (10), venu de forme sur la face extérieure de l'une des parties latérales (7), pour servir de cran pour un dispositif de blocage.

7. dispositif selon au moins l'une ou l'autre des revendications 1 à 6, caractérisé en ce que les parties latérales (6, 7, 14) et les rabats de tête (11, 18) venus de forme constituent comme portée de billes, une surface de roulement courbe (22), étant précisé que le rayon (q) de la bille (19) est, par rapport au rayon (r) de la surface de roulement, dans le rapport 1 : 1,2 à 1 : 3.

EP 0 067 123 B2

Fig.1

Fig.2

Fig.3

Fig.4

Fig.6

Fig.5

Fig.7